# EUROPEAN PATENT SPECIFICATION

(11) **EP 0 698 070 B1**
(45) Date of publication and mention of the grant of the patent: **29.08.2001**
(21) Application number: 94909632.5
(22) Date of filing: 14.02.1994
(51) Int. Cl.: C09J 7/02

(54) **SYSTEM COMPRISING RELEASE AGENT AND HIGH PEEL ADHESION REPOSITIONABLE ADHESIVE**
TRENNMITTEL ENTHALTENDES SYSTEM UND WIEDERVERWENDBARER KLEBSTOFF MIT HOHER HAFTUNG
SYSTEME COMPRENANT UN AGENT DE DETACHEMENT ET UN ADHESIF PELABLE REPOSITIONNABLE A FORTE ADHESION

(30) Priority: 16.02.1993 US 18927
(43) Date of publication of application: 28.02.1996
(73) Proprietor: MINNESOTA MINING AND MANUFACTURING COMPANY, St. Paul, Minnesota 55133-3427 (US)
(72) Inventor: BILSKI, Lori, A., Saint Paul, MN 55133-3427 (US); KUMAR, Ramesh, C., Saint Paul, MN 55133-3427 (US); MERTENS, Timothy, A., Saint Paul, MN 55133-3427 (US); WILSON, Shari, J., Saint Paul, MN 5133-3427 (US)
(74) Representative: Ahner, Francis
(86) International application number: US9401620
(87) International publication number: WO9419420

(56) References cited:
- EP-A- 0 303 430
- EP-A- 0 371 633
- EP-A- 0 444 354

## Description

### FIELD OF INVENTION

The present invention relates to repositionable adhesives. In particular, the present invention relates to high peel adhesion repositionable adhesives and a release agent.

### BACKGROUND OF THE INVENTION

Adhesives can be utilized to make products such as tapes, labels, note tablets and various adhesive coated sheets by coating an adhesive onto a backing or substrate. These adhesive products must be protected from unintended adhesion to other surfaces. Hence, tapes are typically wound into a roll on their own backing. In order to allow the roll to be unwound without undesirable transfer of adhesive to tape backing, it is customary to provide the tape backing with a low adhesion backsize. The release agent must reproducibly provide an appropriate level of release to the adhesive of interest, but not to deleteriously affect the adhesive. Moreover, the release coating should not impair the writing quality or indicia receptibility of the substrate.

Typically, positionable adhesives are utilized with release agents. Positionable adhesives are those which allow for the placement of an article containing such adhesive onto a receptor in an exact position, because the article can be adjusted relative to the receptor after initial placement. In some instances, the adhesive can be designated repositionable or repeatedly reusable. As used herein, the term "repositionable" refers to the ability to be repeatedly adhered to and removed from a substrate without substantial loss of adhesion capability. Such adhesives exhibit aggressive tack but low peel adhesion properties, thus allowing repeated reusability.

It is often desirable to utilize repositionable adhesives having higher peel adhesions than those obtained with conventional repositionable adhesives. Moreover, it is desirable that the repositionable adhesive does not build adhesion excessively with time. Generally, systems in the art provide one of the following :
i) low-peel adhesion with an indicia receptive surface ;
ii) high peel adhesives which exhibit increasing peel adhesion with prolonged attachment and a reduced indicia receptivity, and ;
iii)high peel adhesives which exhibit increasing peel adhesion with prolonged attachment and with unacceptably high release force.

EP 371 633 describes a polymeric release agent having a hydrated Tg between - 15°C and +35°C, which correspond to an actual Tg which is in some cases above +65°C.

EP 444 354 deals with microspheres useful as repositionable pressure sensitive adhesives. This document does not suggest to blend said microspheres with an adhesive binder.

It has now been found that a repositionable adhesive composition having high peel adhesion can be contacted with an indicia receptive release agent and yet be removed from the release agent without any deleterious effects. This adhesive composition comprises an adhesive blend including microspheres and a binder comprising at least one acrylamide moiety.

### SUMMARY OF THE INVENTION

The present invention includes a system comprising :
a) a release agent comprising a polymer having at least one vinyl polymeric segment having a T_{g} between-10°C and 65°C and at least one siloxane polymeric segment, and
b) a repositionable adhesive composition having a peel adhesion of at least 3.88 N/dm and comprising a blend of one or more polymeric and elastomeric microspheres wherein the microspheres comprise at least one alkyl acrylate or alkyl methacrylate moiety and an adhesive binder comprising at least one acrylamide-based moiety.

The microspheres of the present invention are polymeric, inherently tacky and elastomeric. The binder which preferably has pressure sensitive adhesive properties comprises a polymer having at least one acrylamide-moiety. If desired, the acrylamide-moiety can be copolymerized with free radical polymerizable monomers.

The release agent of the present invention is coated onto a first substrate such as a paper backing. The agent comprises a polymer having at least one vinyl polymeric segment having a T_{g} between -10°C and 65°C and at least one siloxane polymeric segment. Preferably, the T_{g} should be between 20°C and 45°C for the vinyl polymer segment.

In one embodiment of the present invention, the release agent is a copolymer which comprises the formula: 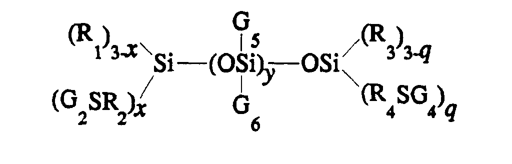 wherein
- R₁: are monovalent moieties which can independently be the same or different and are selected from the group consisting of alkyl, aryl, alkaryl, alkoxy, alkylamino, hydroxyl, hydrogen, and fluoroalkyl;
- R₂: can independently be the same or different and are divalent linking groups;
- R₃: are monovalent moieties which can independently be the same or different and are selected from the group consisting of alkyl, aryl, alkylaryl, alkoxy, alkylamino, hydroxyl, hydrogen, and fluoroalkyl;
- R₄: can independently be the same or different and are divalent linking groups;
- x: is an integer of 0-3;
- y: is an integer of 10 or greater;
- q: is an integer of 0-3;

G₅ and G₆ are monovalent moieties which can independently be the same or different selected from the group consisting of alkyl, aryl, alkylaryl, alkoxy, alkylamino, fluoralkyl, hydrogen, and -WSA wherein W is a divalent linking group and A is defined below; and

G₂ and G₄ comprise A wherein A is a vinyl polymeric segment or block consisting essentially of a polymerized free radically polymerizable monomer.

In another embodiment of the present invention, the release agent comprises a copolymer of D and E monomers copolymerized to form a polymeric backbone with F monomer grafted thereto wherein:
- D: is at least one free radically polymerizable vinyl monomer;
- E: is at least one polar monomer copolymerizable with D, the amount of E being up to 30% of the total weight of all monomers, and
- F: is a monomer having the general formula

X-(Y)ₙSiR₍₃₋ₘ₎Zₘ

wherein
X is a vinyl group copolymerizable with the D and E monomers,
Y is a divalent linking group where n is zero or 1;
m is an integer of 1 to 3;
R is hydrogen, lower alkyl (e.g., methyl, ethyl, or propyl), aryl (e.g., phenyl or substituted phenyl), or alkoxy groups; and
Z is a monovalent siloxane polymeric moiety having a number average molecular weight above 1,000 and is essentially unreactive under copolymerization conditions.

The present invention also includes an article comprising at least two substrates with front and rear surfaces. The first substrate should have at least a portion of its rear surface coated with the adhesive composition of the present invention and the second substrate should have at least a portion of its front surface coated with the release agent of the present invention. The adhesive composition must contact the release agent when the substrates are stacked or rolled. The article can have additional substrates between the first and second substrates. Each additional substrate should have at least a portion of its rear surface coated with the adhesive composition and a portion of its front surface coated with the release agent.

The following terms have these meanings as used herein:
1. The term "droplet" means the liquid stage of the microspheres prior to the completion of polymerization.
2. The term "cavity" means a space within the walls of a droplet or microsphere when still in the suspension or dispersion medium prior to drying, and thus containing whatever medium was used.
3. The term "void" means empty space completely within the walls of a polymerized microsphere.

All weights, parts and ratios herein are by weight unless specifically stated otherwise.

### DETAILED DESCRIPTION OF THE INVENTION

The microspheres of the present invention should be polymeric and elastomeric. Preferably, the microspheres are inherently tacky and solid although hollow microspheres can be utilized.

The microspheres should comprise at least one alkyl acrylate or alkyl methacrylate moiety. Alkyl acrylate or methacrylate monomers useful in preparing the solid microspheres for pressure-sensitive adhesives of this invention are those monofunctional unsaturated acrylate or methacrylate esters of non-tertiary alkyl alcohols, the alkyl groups of which have from 4 to 14 carbon atoms. Such acrylates are oleophilic, water emulsifiable, have restricted water solubility and as homopolymers, generally have a glass transition temperature below -20°C. Included within this class of monomers are, for example, isooctyl acrylate, 4-methyl-2-pentyl acrylate, 2-methylbutyl acrylate, isoamyl acrylate, sec-butyl acrylate, n-butyl acrylate, 2-ethylhexyl acrylate, isodecyl methacrylate, isononyl acrylate and isodecyl acrylate, singly or in mixtures.

Preferred acrylates include isooctyl acrylate, isononyl acrylate, isoamyl acrylate, isodecyl acrylate, 2-ethylhexyl acrylate, n-butyl acrylate, sec-butyl acrylate and mixtures thereof. Acrylate or methacrylate or other vinyl monomers which, as homopolymers, have glass transition temperatures higher than -20°C, e.g., tert-butyl acrylate, isobornyl acrylate, butyl methacrylate, vinyl acetate, N-vinyl pyrolidone and acrylamide may be utilized in conjunction with one or more of the acrylate or methacrylate monomers provided that the glass transition temperature of the resultant polymer is below -20°C.

Preferred microspheres are described in U.S. Patent No. 3,691,140. These microspheres utilize at least one monomer selected from the group consisting of substantially oil-insoluble, water soluble, ionic monomers and maleic anhydride. The monomers can be utilized alone, as a mixture of two or more ionic monomers or as a mixture of maleic anhydride and one or more ionic monomers. Examples of ionic monomers include, but are not limited to, sodium methacrylate, ammonium acrylate, sodium acrylate, trimethylamine p-vinyl benzimide, 4,4,9-tri-methyl-4-azonia-7-oxo-8-oxa-dec-9-ene-1-sulphonate, N,N-dimethyl-(β-methacryloxyethyl) ammonium propionate betaine, trimethylamine methacrylamide.

Microspheres can be prepared by an aqueous suspension polymerization technique utilizing emulsifiers in an amount greater than the critical micelle concentration. Critical micelle concentration is defined as that minimum emulsifier concentration necessary for the formation of micelles. The critical micelle concentration is slightly different for each emulsifier. Useable concentrations typically range from 1.0 X 10⁻⁴ to 3.0 moles per liter. Anionic, nonionic or cationic emulsifiers can be used. Typical examples of anionic emulsifiers include sodium dodecylbenzene sulfonate and sodium salts of alkyl aryl ether sulfonates. Examples of nonionic emulsifiers include ethoxylated oleyl alcohol and polyoxyethylene octylphenyl ether and a useful cationic surfactant is a mixture of alkyl dimethylbenzyl ammonium chlorides wherein the alkyl chain is from ten to eighteen carbons long. While only examples of anionic, nonionic and cationic emulsifiers are given herein, it is believed that amphoteric emulsifiers would likewise work.

Initiators effecting polymerization are those which are normally suitable for free-radical polymerization of acrylate monomers. Examples of such initiators include thermally-activated initiators such as azo compounds, hydroperoxides and peroxides and photoinitiators such as benzophenone, benzoin ethyl ether and 2,2,-dimethoxy-2-phenyl acetophone. Other suitable initiators include lauryl peroxide and bis(t-butyl cyclohexyl)peroxy dicarbonate. The initiator concentration should be sufficient to bring about a complete monomer conversion in a desired time span and temperature range. Parameters which affect the concentration of initiator employed include the type of initiator and particular monomer and/or monomers involved. It is believed that effective concentrations range from 0.10 to 1 percent by weight of the total monomers and more preferably, from 0.25 to 0.70 percent by weight monomers and/or monomers. Polymeric stabilizers may also be present, but are not necessary. Upon addition, heat or radiation are applied to initiate the polymerization of the monomers which is an exothermic reaction.

The microsphere composition may also contain a crosslinking agent. Examples of useful crosslinking agents include, but are not limited to: multifunctional (meth)acrylate(s), e.g., butanediol diacrylate or hexanediol diacrylate or other multifunctional crosslinkers such as divinylbenzene and mixtures thereof. When used, crosslinker(s) is (are) added at a level of up to 0.15 equivalent weight percent, preferably up to 0.1 equivalent weight percent, of the total polymerizable composition. The "equivalent weight percent" of a given compound is defined as the number of equivalents of that compound divided by the number of equivalents in the total composition, wherein the equivalent is the number of grams divided by the equivalent weight.

Following polymerization, a stable aqueous suspension of solid microspheres at room temperature is obtained. The suspension may have non-volatile solids contents from 10 to 50 percent by weight. Upon prolonged standing, the suspension separates into two phases, one being aqueous and the other being an aqueous suspension of the polymeric sphere. The aqueous suspension of microspheres may be utilized immediately following polymerization, because the suspension is stable to agglomeration or coagulation, under room temperature conditions. Decantation of the microsphere-rich phase provides an aqueous suspension having a non-volatile solids content, which if shaken, will readily redisperse.

Alternatively, the suspension may be coagulated with an organic liquid such as methanol, followed by washing and drying. These partially dried polymer spheres, with sufficient agitation, will readily suspend in a variety of common organic solvents such as ethyl acetate, tetrahydrofuran, heptane, 2-butanone, benzene cyclohexane and esters.

Suitable binders include polymers having at least one acrylamide-based moiety. The acrylamides which can be used in the present invention are the reaction products of an acrylic or methacrylic acid with ammonia or primary or secondary amines. Examples of suitable acrylamides include, but are not limited to, acrylamide, isooctyl acrylamide, 2-ethyl hexyl acrylamide, and N,N-dimethyl acrylamide.

If desired, the acrylamides can be copolymerized with one or more monomers having vinyl groups. Any vinyl monomer may be used so long as the product acts as a binder for the microspheres and does not deleteriously inhibit the release agent and adhesive. Suitable monomers include alkyl acrylates or methacrylates. Alkyl acrylate or methacrylate monomers useful in preparing the binder are those monofunctional unsaturated acrylate or methacrylate esters of non-tertiary alkyl alcohols, the alkyl groups of which have from 4 to 14 carbon atoms. Examples of such monomers include esters of acrylic acid or methacrylic acid with non-tertiary alkyl alcohols such as 1-butanol, 1-pentanol, 2-methyl-1-butanol, 1-methyl-1-butanol, 1-methyl-1-pentanol, 2-methyl-1-pentanol, 3-methyl-1-pentanol, 2-ethyl-1-butanol, 3,5,5-trimethyl-1-hexanol, 3-heptanol, 2-octanol, 1-decanol, 1-dodecanol, isooctyl alcohol, isononyl alcohol and 2-ethylhexyl alcohol. Such monomeric acrylic or methacrylic esters are known in the art and many are commercially available.

Preferably, the binder comprises up to 15 parts acrylamide and from 85 to 100 parts by weight acrylic or methacrylic ester. More preferably, the binder comprises from 4 to 10 parts acrylamide and from 91 to 96 parts acrylic or methacrylic ester.

The adhesive composition of this invention is made by combining the binder with the microspheres. If an organic dispersion of the adhesive is desired, a solution of binder is combined with an organic dispersion of microspheres. If an aqueous adhesive composition is desired, an aqueous suspension of microspheres is combined with an aqueous solution of binder. Preferably, the weight of the binder comprises from 10 to 90 parts by weight of the adhesive and the microspheres comprise from 10 to 90 parts by weight of adhesive of this invention.

Properties of the repositionable pressure-sensitive adhesives of the present invention can be altered by the addition of a tackifying resin(s) and/or plasticizer(s). Preferred tackifiers for use herein include hydrogenated rosin esters commercially available from such companies as Hercules, Inc. under the tradenames Foral™ and Pentalyn™. Individual tackifiers include those based on t-butyl styrene. Useful plasticizers include dioctyl phthalate, 2-ethyl hexyl phosphate and tricresyl phosphate.

Optionally, colorants, fillers, stabilizers and various other polymeric additives can be utilized.

The repositionable adhesive compositions of the present invention should have a peel adhesion of at least 125 g/1.25 inches. (3.88 N/dm). Preferably, the peel adhesion should be at least 250 g/1.25 inches. (7.76 N/dm).

The present invention also includes a release agent which is capable of releasing a repositionable adhesive having high peel adhesion. The release agent has at least one siloxane polymeric segment and at least one vinyl polymeric segment having a T_{g} between-10°C and 65°C. By virtue of its chemical composition and structure and the resultant properties, the release agent is well-suited for repositionable adhesives having higher peel adhesions. In one embodiment of the present invention, the release agent is a copolymer which comprises the formula: 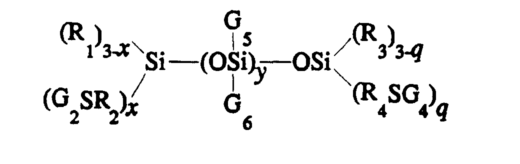 R₁ are monovalent moieties which can independently be the same or different which are selected from the group consisting of alkyl, aryl, alkylaryl, alkoxy, alkylamino, hydroxyl, fluoroalkyl, and hydrogen. Preferably, R₁ are monovalent moieties which can independently be the same or different selected from the group consisting of C₁₋₄ alkyl and hydroxyl. Most preferably, R₁ is selected from the group consisting of methyl and butyl.

R₂ are divalent linking groups which can independently be the same or different. Suitable divalent linking groups include but are not limited to the following: C₁ to C₁₀ alkylene, arylene, alkylarylene and alkoxyalkylene. Preferably, R₂ is selected from the group consisting of C₁₋₃ alkylene and C₇-C₁₀ alkylarylene due to ease of synthesis of the compound. Most preferably, R₂ is selected from the group consisting of -CH₂-; 1,3-propylene; and 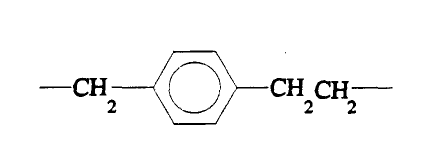 R₃ are monovalent moieties which can independently be the same or different and which are selected from the group consisting of alkyl, aryl, alkylaryl, alkoxy, alkylamino, hydroxyl and fluoroalkyl, and hydrogen. Preferably, R₃ are monovalent moieties which can independently be the same or different selected from the group consisting of C₁₋₄ alkyl and hydroxyl. Most preferably, R₃ is selected from the group consisting of methyl and butyl.

R₄ can independently be the same or different and are divalent linking groups. Suitable divalent linking groups include but are not limited to the following: C₁ to C₁₀ alkylene, arylene, alkylarylene and alkoxyalkylene. Preferably, R₄ is selected from the group consisting of C₁₋₃ alkylene and C₇-C₁₀ alkylarylene for reasons of ease of synthesis. Most preferably, R₄ is selected from the group consisting of -CH₂-; 1,3-propylene; and

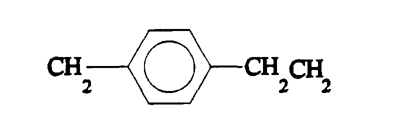

G₅ and G₆ are monovalent moieties which can independently be the same or different selected from the group consisting of alkyl, aryl, alkylaryl, alkoxy, alkylamino, fluoralkyl, hydrogen, and -WSA wherein W is a divalent linking group and A is defined below.

W are divalent linking groups. Suitable divalent linking groups include, but are not limited to, C₁ to C₁₀ alkylene, alkarylene, arylene, and alkoxyalkylene. Preferably, W is selected from the group consisting of methylene and propylene.

G₂ and G₄ comprise A. A is a vinyl polymeric segment consisting essentially of polymerized free radically polymerizable monomer. A can comprise either a homopolymer segment or block or a copolymer segment or block. The substrate anchorage properties of the release agent are determined by the vinyl polymeric segment content. The chemical nature or composition of the vinyl polymeric segments can be modified to improve substrate anchorage and adhesion to the substrate. Thus, the release agent can be chemically tailored to provide a specific level of substrate anchorage. The selection of the composition of A is typically based upon the intended use of the release agent and the properties the release agent must possess in order to accomplish its intended purpose.

A can include, but is not limited to, those monomers wherein the free radically polymerizable monomer or monomers are chosen such that a vinyl segment has a T_{g} or Tₘ above -20°C. The preferred free radically polymerizable monomers are selected from the group consisting of N-vinyl pyrrolidone, N,N-diethylaminoethyl methacrylate, N,N-dimethylaminoethyl methacrylate, N,N-diethylaminoethyl acrylate, N,N-dimethylaminoethyl acrylate and N-t-butylamino ethyl methacrylate, styrene, methyl methacrylate, methyl acrylate, acrylic acid, itaconic acid, maleic acid, 2-carboxy ethyl acrylate, acrylamide, methacrylamide, acrylonitrile, isobornyl methacrylate,, butyl methacrylate, isopropyl methacrylate, vinyl acetate, hydroxy propylacrylate, hydroxy ethyl acrylate, dihydroxy propyl acrylate and mixtures thereof.

The amount an composition of the vinylic segment to silicone should preferably range from 98 to 2 parts to 40 to 60 parts by weight. Preferably, the vinyl polymeric segments should have a molecular weight in the range of 2,000 to 80,000, preferably 5,000 to 50,000.

The release properties of the agent are determined by both the silicone content (weight percentage) of the copolymer and the molecular weight of the silicone segment, with higher silicone content and/or molecular weight providing easier release. A copolymer or copolymer blend can, therefore, be chemically tailored to provide a specific level of release which can be reproduced with consistency, thus making possible the variation of the release properties of a liner over a range of values in a controlled fashion.

The silicone polymeric segment must have preferably an average molecular weight above 1000 in order for the release agent to function properly. Preferably, the silicone polymeric segment has a number average molecular weight of 1000 to 20,000. Most preferable, the silicone polymeric segment has a number average molecular weight ranging from 2,000 to 15,000. The silicone polymeric segment can preferably comprise about 2 to 60 wt% of the release agent in order to allow for a wide range of release performance.

In another embodiment of the present invention, the release agent comprises a copolymer of D and E monomers copolymerized to form a polymeric backbone. Grafted to the backbone is an F monomer wherein
D is at least one free radically polymerizable vinyl monomer ;
E is at least one polar monomer copolymerizable with D, the amount of E being up to 30 % of the total weight of all monomers, and
F is a monomer having the general formula

   X-(Y)ₘSiR₍₃₋ₘ₎Zₘ

   wherein
   X is a vinyl group copolymerizable with the D and E monomers,
   Y is a divalent linking group where n is zero or 1;
   m is an integer of from 1 to 3 ;
   R is hydrogen, lower alkyl (e.g., methyl, ethyl, or propyl), aryl (e.g., phenyl or substituted phenyl), or alkoxy ; and
   Z is a monovalent siloxane polymeric moiety having a number average molecular weight above 1000 and is essentially unreactive under copolymerization conditions.

The D and E monomers provide the adhesion to the substrate and other properties such as ink receptivity and water solubility. The F monomer provides the release properties.

The D monomer or monomers (there may be more than one) are preferably chosen such that the backbone T_{g} or Tₘ is above-20°C. Representative examples of D monomers include styrene, vinyl acetate, vinyl chloride, vinylidene chloride, acrylonitrile and acrylic or methacrylic acid esters of nontertiary alcohols or tertiary alcohols such as methanol, ethanol, propanol, isopropanol, butanol, isobutanol, cyclohexanol, benzyl alcohol, dodecanol, hexadecanol, and octadecanol, the alcohols having from 1 to 18 carbon atoms.

Especially preferred D monomers include methyl methacrylate, butyl methacrylate, vinyl acetate, partially hydrolyzed vinyl acetate, methyl acrylate and octadecyl acrylate.

Representative E monomers useful in practicing the invention, and which may be used either individually or in combination, include carboxylic acids such as acrylic acid, methacrylic acid, itaconic acid, maleic acid, fumaric acid, and 2-carboxyethyl acrylate and their ammonium or metal salts ; sulfonic or phosphonic acids such as 2-sulfoethyl methacrylate, 3-sulfopropyl acrylate, 3-sulfopropyl methacrylate, styrene sulfonic acid, and vinyl benzyl phosphonic acid and their ammonium or metal salts ; amides such as acrylamide, methacrylamide, N,N-dimethyl acrylamide, and N-vinyl pyrrolidone, N,N-diethylaminoethyl methacrylate, N,N-dimethylaminoethyl methacrylate, N,N-diethylaminoethyl acrylate, N,N-dimethylaminoethyl acrylate and N-t-butylamino ethyl methacrylate ; and monomers having hydroxyl functionality (e.g., 2-hydroxyethyl acrylate, 2-hydroxyethyl methacrylate, hydroxypropyl acrylate, and dihydroxypropyl acrylate), ammonium functionality derived from reaction of amine-containing monomers (e.g., N,N-dimethylaminoethyl methacrylate and vinyl pyridine) with alkylating agents or protic acids, or zwitterionic functionality such as that derived by reaction of amine monomers with hydrogen peroxide or propane sulfone.

Especially preferred E monomers include N-vinyl pyrrolidone, N,N-diethylaminoethyl methacrylate, N,N-dimethylaminoethyl methacrylate, N,N-diethylaminoethyl acrylate, N,N-dimethylaminoethyl acrylate and N-t-butylamino ethyl methacrylate, methyl methacrylate, methyl acrylate, acrylic acid, itaconic acid, maleic acid, 2-carboxy ethyl acrylate, acrylamide, methacrylamide, isobornyl methacrylate, butyl methacrylate, isopropyl methacrylate, hydroxy propylacrylate, hydroxy ethyl acrylate, dihydoxy propyl acrylate and mixtures thereof.

The F monomer has the general formula :

X-(Y)ₙSiR₍₃₋ₘ₎Zₘ

X is a vinyl group copolymerizable with the D and E monomers. The preferred F monomer may be further defined as having an X group which has the general formula: 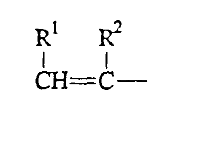 wherein R¹ is a hydrogen atom or a COOH group and R² is a hydrogen atom, a methyl group, or a CH₂COOH group.

The Z group of the F monomer has the general formula: 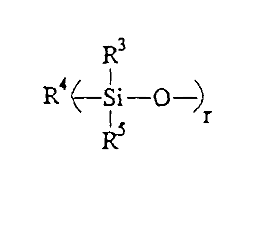 where R³ and R⁵ are independently lower alkyl, aryl, or fluoroalkyl, where lower alkyl and fluoroalkyl both refer to alkyl groups having from one to three carbon atoms and where aryl refers to phenyl or substituted phenyl. R⁴ may be alkyl, alkoxy, alkylamino, aryl, hydroxyl, or fluoroalkyl, and r is an integer from 5 to 700. Preferably, the F monomer has a general formula selected from the group consisting of the following, where m is 1, 2 or 3, p is zero or 1, R" may be alkyl or hydrogen, and X, R, and Z are as defined above: 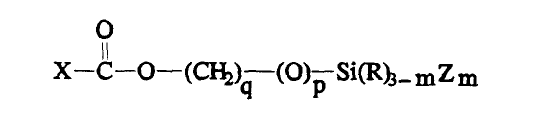 wherein q is an integer from 2 to 6;

X-Si(R)₃₋ₘZₘ,

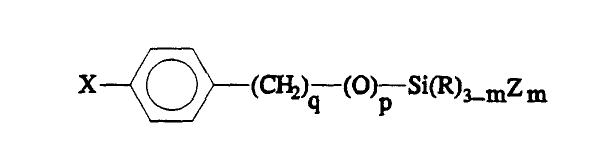

wherein q is an integer from zero to 2; 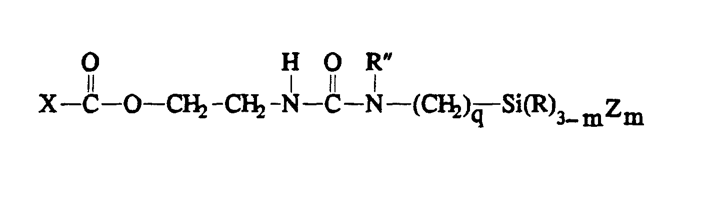 wherein q is an integer from 2 to 6; and 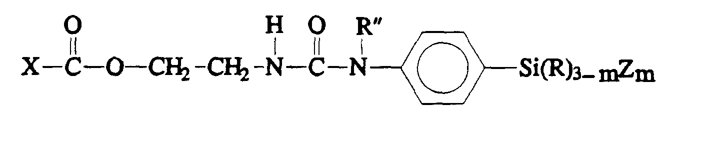 wherein q is an integer from 2 to 6.

Y is a divalent linking group.

R comprises hydrogen, lower alkyl groups such as methyl, ethyl, or propyl, aryl groups such as phenyl or substituted phenyl and alkoxy groups such as methoxy and ethoxy groups.

Z is a monovalent siloxane polymeric moiety having a number average molecular weight above 1,000 and is essentially unreactive under copolymerization conditions.

The release agent of the present invention may comprise the copolymers of the two embodiments alone, or may comprise copolymers blended with other compatible homopolymers and/or copolymers. The low percentage of silicone contained in the copolymers makes the copolymers readily compatible with polymers of similar composition to vinyl polymeric blocks or segments. In addition, there are several pairs of dissimilar polymers that yield compatible blends due to specific interaction as described by S. Krause in Polymer Blends, Academic Press, New York, 1978. Introduction of a low level of silicone block onto one of these polymers will not influence compatibility.

In addition, additives, fillers or pigments such as alumina, silica, titanate, or calcium carbonate may, of course, be added to the copolymer compositions.

The release compositions do not require curing or crosslinking; however, if solvent resistance is desired for a particular application, crosslinking can be effected by standard methods well-known in the art, such as radiation curing (electron beam or ultraviolet light) or chemical crosslinking.

The release agent should preferably have a surface release value not greater than 10 oz./in. (11 N/dm). More preferably, it should be trot greater than 5oz./in. (5.5N/dm). It should be understood that this upper limit applies to use with highly aggressive repositionable pressure-sensitive adhesives.

The release agent compositions may be applied to any substrate by means of conventional coating techniques such as wire-wound rod, direct gravure, offset gravure, reverse roll, air-knife and trailing blade coating. Suitable substrates include paper, nonwoven fabrics and films of thermoplastic resins such as polyesters, polyamides, polyolefins, polycarbonates and polyvinyl chloride.

Similarly, the adhesive compositions can be applied to a substrate by means of conventional coating techniques such as wire-wound rod, direct gravure, offset gravure, reverse roll, air-knife, spray coat, dye coat and trailing blade coating. Suitable backing or substrate materials for the adhesive composition include, but are not limited to, paper, plastic films, cellulose acetate, ethyl cellulose, woven or nonwoven fabric formed of synthetic or natural materials, metal, metallized polymeric film and ceramic sheet material.

The binder of the present invention should comprise a sufficient amount of at least one acrylamide-based moiety to limit interaction with the release agent of the present invention thereby permiting the repositionable high peel adhesion adhesive of the present invention to be removable from the release agent of the present invention. Moreover, once the adhesive composition is removed from the release agent, the adhesive composition should still maintain high peel adhesion and not build adhesion excessively over time. Likewise, the release agent should provide low sheet removal force while retaining indicia receptivity.

The following examples are illustrative in nature and are not intended to limit the invention in any way.

### TEST METHODS

### PEEL ADHESION

Peel adhesion is the force required to remove polyester film applied to the adhesive coated test material measured at a specific angle and rate of removal. In the examples, this force is expressed in grams per 1.25 inch width of coated sheet. The procedure followed is:

A strip, 3,17cm (1.25 inches) wide, of polyester film is applied to the horizontal surface of a adhesive coated sample fixed on a test plate. A 2,4 kg (4.5 lb.) hard rubber roller is used to apply the strip. The free end of the polyester film is attached to the adhesion tester load cell so that the angle of removal will be 90 degrees. The test plate is then clamped in the jaws of the tensile testing machine which is capable of moving the plate away from the load cell at a constant rate of 30,48 cm (12 inches) per minute. A load cell reading in grams per 3,17 cm (1.25 inches) of coated strip is recorded as the polyester film is peeled from the coated samples.

### SHEET REMOVAL FORCE

Sheet removal force is the force required to remove a sheet from a stack of at least two sheets which are dimensioned 2,54 cm (one inch) by 12,7 cm (five inches) at a ninety angle and rate of removal of 30,48 cm (12 inches) per minute. In the examples, this force is expressed in grams per 2,54 cm (inch) width of coated sheet. The procedure to determine the sheet removal force is:

A strip of at least 2,54 cm (one inch) wide double coated Scotch™ Brand 410 Tape commercially available from the Minnesota Mining and Manufacturing Company is adhered to a steel test plate. Thereafter, a 2,54cm (one inch) wide sample coated with adhesive is cut from the sheet is placed on the test plate, adhesive side down onto the tape so that the entire adhesive coated side of the test sample is covered. The test sample is placed parallel to the dimension of the test plate and the adhesive strip is centered so that the peel removal is made at a ninety degree angle. The test plate is then clamped in the lower jaws of Instron Tensile Tester which is capable of moving the plate away from the load cell at at rate of 30,48 cm (twelve inches) per minute. A piece of Scotch™ Brand 810 Magic Tape commercially available from the Minnesota Mining and Manufacturing Company is then attached to the loose end of the top sheet. The tape is centered over the 2,54 cm (one inch) loose end of the test sample. The free end of the tape is then clamped into the upper jaw of Instron Tensile Tester and then the sample is pulled away at a ninety degree angle and sheet removal force is measured.

### Test Samples

### Release Agent A

A release agent of the present invention was made in the following manner:

Fourty-five grams of methyl acrylate, 35 grams of N-vinyl pyrrolidone, 5 grams acrylic acid, 15 grams of mercapto functional siloxane siloxane commercially available as KF-2001 from Shin-Etsu, 0.25 grams of Vazo™ 64 and 150 grams of methyl ethyl ketone were mixed together in a 453,59 g (16 oz.) amber bottle. The mixture was purged with nitrogen for five minutes at one liter per minute and then the bottle was sealed and tumbled in a constant temperature bath at 55° C for 48 hours. The conversion was 98 percent.

### Release Agent B

A release agent of the present invention was made in the following manner:

Ninety-seven and eight tenths grams of methyl acrylate, 76.1 grams of N-vinyl pyrrolidone, 10.9 grams of acrylic acid, 65.2 grams of the polymeric vinyl-terminated monomer F prepared in accordance with the procedures described in U.S. Patent No. 4,728,571, 0.625 grams of Vazo™ 64 and 375 grams of methyl ethyl ketone were mixed in a 907,18 g (32 ounce) amber bottle. The mixture was purged with nitrogen for five minutes at one liter per minute and then the bottle was sealed and tumbled in a constant temperature bath at 55° C for 48 hours. The conversion was 99.2 percent.

### Microspheres

The microspheres of the present invention were made in the following manner:

At room temperature, 307.69 grams of distilled water, 2.05 grams of ammonium lauryl sulfate and 2.56 grams of Acrylic Acid were added to the mixture. This mixture was neutralized by adding a sufficient amount of ammonium hydroxide to achieve a pH level of 7.0. This mixture was then heated to 70°C. 100 grams of Iso-octyl acrylate and 0.31 grams of Benzoyl Peroxide were then added to this solution.

Together, this mixture is rapidly stirred with an agitation rate to yield sufficient particle size. The reaction is then cooled to about 65°C until the reaction exotherms. After exotherm temperature is reached, the mixture is cooled for 7 hours at 60°C for seven hours. The solution is then filtered and allowed to separate into two layers. The top layer is then coagulated with isopropyl alcohol. The alcohol is extracted and the microspheres are redispersed in heptane.

### Binder

The adhesive binder was prepared in the following manner:

155.61 grams of Ethyl Acetate, 100 grams of Iso-octyl Acrylate and 4.15 grams of acrylamide, 0.22 grams of benzoyl peroxide and 180.57 grams of heptane. The mixture was heated at 59° C for 48 hours. Thereafter, 0.66 grams of ethyl acetate and 0.49 grams of Santanox® were added.

### Example 1

Using a 60 pyramidal gravure cylinder, the 15% solids Release Agent A was applied to virgin white paper commercially available from Crosspointe Paper Company of Miami Mill, Carrolton, Ohio. Equal amounts of 23% solids of the micropheres and 23% solids of the adhesive binder described were coated at about 140 grams per 2,54 cm (inch) wet adhesive in a 5,08 cm (two inch) width pattern parallel to the edge and 1,27 cm (one half inch) from the edge. The peel adhesion for the adhesive composition was 300 grams 3,17cm (1.25 inch) The sheet removal force is approximately 20 grams/2,54 cm (1 inch). The paper was sheeted into a pad form to be used as a flipchart with the ability to flip pages easily, remove sheets with no curl and hang on a variety of office wall surfaces for up to 48 hours.

### Example 2

Using a 120 ruling mill gravure cylinder, a 15% solids Release Agent A was applied to virgin white paper commercially available from Crosspointe Paper Company of Miami Mill. A blend of equal amounts of 23% solids microspheres and 23% solids adhesive binder were coated in two 2,54 cm (1 inch) strips parallel. The strips were coated 53,34 cm (21 inches) apart from each other. The adhesive blend was coated at about 140 grams per 2,54 cm (inch) wet adhesive. The peel adhesion was measured to be 300 grams 3,17cm (1.25 inch). The sheet removal force was approximately 40 grams 2,54 cm (1 inch.)

In summary, adhesive systems have been described. Although specific embodiments and examples have been disclosed herein, it should be borne in mind that these have been provided by way of explanation and illustration and the present invention is not limited thereby. Certainly, modifications which are within the ordinary skill in the art are considered to lie within the scope of this invention as defined by the following claims.

## Claims

1. A system comprising ;
a) a release agent comprising a polymer having at least one vinyl polymeric segment having a T_{g} between-10°C and 65°C and at least one siloxane polymeric segment, and
and b) a repositionable adhesive composition having a peel adhesion of at least 3.88 N/dm and comprising a blend of one or more polymeric and elastomeric microspheres wherein the microspheres comprise at least one alkyl acrylate or alkyl methacrylate moiety and an adhesive binder comprising at least one acrylamide-based moiety.

2. The system of Claim 1 wherein said binder further comprises at least one free radical polymerizable monomer copolymerized with said acrylamide-based moiety.

3. The system of Claim 2 wherein said free radical polymerizable monomer is selected from the group consisting of an acrylate or methacrylate.

4. The system of Claim 1 wherein said adhesive composition comprises from 10 to 90 parts by weight of said binder and from 90 to 10 parts by weight of said microsphere.

5. The system of Claim 1 wherein said release agent is a copolymer comprising the formula : 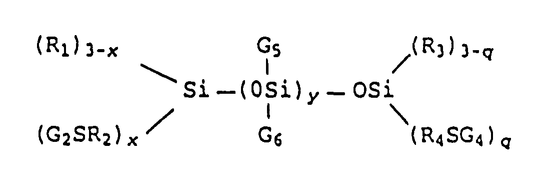 wherein
R₁ are monovalent moieties which can independently be the same or different and are selected from the group consisting of alkyl, aryl, alkylaryl, alkoxy, alkylamino, hydroxyl, hydrogen, and fluoroalkyl ;
R₂ can independently be the same or different and are divalent linking groups ;
R₃ are monovalent moieties which can independently be the same or different and are selected from the group consisting of alkyl, aryl, alkylaryl, alkoxy, alkylamino, hydroxyl, hydrogen and fluoroalkyl ;
R₄ can independently be the same or different and are divalent linking groups ;
x is an integer of 0-3 ;
y is an integer of 10 or greater ;
q is an integer of 0-3 ;
G₅ and G₆ are monovalent moieties which can independently be the same or different selected from the group consisting of alkyl, aryl, alkylaryl, alkoxy, alkylamino, fluoralkyl, hydrogen, and -WSA wherein W is a divalent linking group and A is a vinyl polymeric segment or block consisting essentially of a polymerized free radically polymerizable monomer ;
G₂ and G₄ comprise A.

6. The system of Claim 5 wherein :
A is selected from the group consisting of N-vinyl pyrrolidone, N,N-diethylaminoethyl methacrylate, N,N-dimethylaminoethyl methacrylate, N,N -diethylaminoethyl acrylate, N,N-dimethylaminoethyl acrylate and N-t-butylamino ethyl methacrylate, styrene, methyl methacrylate, methyl acrylate, acrylic acid, itaconic acid, maleic acid, 2-carboxy ethyl acrylate, acrylamide, methacrylamide, acrylonitrile, isobornyl methacrylate, butyl methacrylate, isopropyl methacrylate, vinyl acetate, hydroxy propylacrylate, hydroxy ethyl acrylate, dihydroxy propyl acrylate and mixtures thereof.

7. The system of Claim 1 wherein the release agent is a copolymer of D and E monomers copolymerized to form a polymeric backbone with F monomer grafted thereto wherein:
D is at least one free radically polymerizable vinyl monomer ;
E is at least one polar monomer copolymerizable with D, the amount of E being up to 30 % of the total weight of all monomers, and
F is a monomer having the general formula
X-(Y)ₘSiR₍₃₋ₘ₎Zₘ
wherein
X is a vinyl group copolymerizable with the D and E monomers,
Y is a divalent linking group where n is zero or 1 ;
m is an integer of from 1 to 3 ;
R is hydrogen, lower alkyl (e.g., methyl, ethyl, or propyl), aryl (e.g., phenyl or substituted phenyl), or alkoxy ; and
Z is a monovalent siloxane polymeric moiety having a number average molecular weight above 1000 and is essentially unreactive under copolymerization conditions.

8. The system of Claim 7 wherein said D monomer is selected from the group consisting of styrene, vinyl acetate, vinyl chloride, vinylidene chloride, acrylonitrile, acrylic or methacrylic acid esters of non-tertiary alcohols having from 1 to 18 carbon atoms and mixtures thereof.

9. The system of Claim 8 wherein said E monomer is selected from the group consisting of N-vinyl pyrrolidone, N,N-diethylaminoethyl methacrylate, N,N-dimethylaminoethyl methacrylate, N,N-diethylaminoethyl acrylate, N,N-dimethylaminoethyl acrylate and N-t-butylamino ethyl methacrylate, methyl methacrylate, methyl acrylate, acrylic acid, itaconic acid, maleic acid, 2-carboxy ethyl acrylate, acrylamide, methacrylamide, isobornyl methacrylate, butyl methacrylate, isopropyl methacrylate, hydroxy propylacrylate, hydroxy ethyl acrylate, dihydoxy propyl acrylate and mixtures thereof.

10. An article comprising at least a first and a second substrate, said first substrate having a rear surface coated with a repositionable adhesive composition having a peel adhesion of at least 3.88 N/dm and comprising a blend of one or more polymeric and elastomeric microspheres wherein the microspheres comprise at least one alkyl acrylate or alkyl methacrylate moiety and an adhesive binder comprising at least one acrylamide moiety and said second substrate having at least a portion of said front surface coated with a release agent comprising a polymer having at least one vinyl polymeric segment having a Tg between -10°C and 65°C and at least one siloxane polymeric segment.

11. The article of Claim 10 wherein said article further comprises at least one substrate therebetween said first and second substrates, each additional substrate having a front and a rear surface, said front and rear surfaces of said additional substrates facing each other, each additional substrate having at least a portion of a said rear surface coated with said adhesive composition and at least a portion of each said front face with said release agent.

## Patentansprüche

1. System, umfassend:
a) ein Trennmittel, das ein Polymer umfasst, welches wenigstens ein Vinylpolymersegment mit einem T_{g} zwischen -10°C und 65 °C sowie wenigstens ein Siloxanpolymersegment aufweist; und
b) eine repositionierbare Kleberzusammensetzung mit einer Schälfestigkeit von wenigstens 3,88 N/dm, die ein Gemisch umfasst von einer oder mehreren Sorten polymerer und elastomerer Mikrokugeln, wobei die Mikrokugeln wenigstens eine Alkylacrylat- oder Alkylmethacrylat-Struktureinheit umfassen, sowie einem adhäsiven Bindemittel, das wenigstens eine auf Acrylamid beruhende Struktureinheit umfasst.

2. System gemäß Anspruch 1, wobei das Bindemittel weiterhin wenigstens ein radikalisch polymerisierbares Monomer umfasst, das mit der auf Acrylamid beruhenden Struktureinheit copolymerisiert ist.

3. System gemäß Anspruch 2, wobei das radikalisch polymerisierbare Monomer aus der Gruppe ausgewählt ist, die aus einem Acrylat und einem Methacrylat besteht.

4. System gemäß Anspruch 1, wobei die Kleberzusammensetzung 10 bis 90 Gewichtsteile des Bindemittels und 90 bis 10 Gewichtsteile der Mikrokugeln umfasst.

5. System gemäß Anspruch 1, wobei das Trennmittel ein Copolymer ist, das die Formel 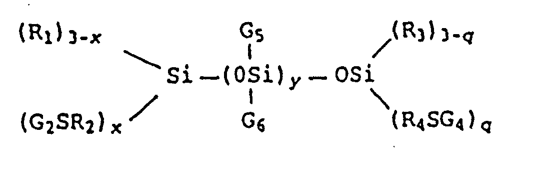 umfasst, wobei
R₁ einwertige Struktureinheiten sind, die unabhängig voneinander gleich oder verschieden sein können und aus der Gruppe ausgewählt werden, die aus Alkyl, Aryl, Alkylaryl, Alkoxy, Alkylamino, Hydroxy, Wasserstoff und Fluoralkyl besteht;
R₂ unabhängig voneinander gleich oder verschieden sein können und zweiwertige Verknüpfungsgruppen sind;
R₃ einwertige Struktureinheiten sind, die unabhängig voneinander gleich oder verschieden sein können und aus der Gruppe ausgewählt werden, die aus Alkyl, Aryl, Alkylaryl, Alkoxy, Alkylamino, Hydroxy, Wasserstoff und Fluoralkyl besteht;
R₄ unabhängig voneinander gleich oder verschieden sein können und zweiwertige Verknüpfungsgruppen sind;
x eine ganze Zahl von 0-3 ist;
y eine ganze Zahl von 10 oder darüber ist;
q eine ganze Zahl von 0-3 ist;
G₅ und G₆ einwertige Struktureinheiten sind, die unabhängig voneinander gleich oder verschieden sein können und aus der Gruppe ausgewählt werden, die aus Alkyl, Aryl, Alkylaryl, Alkoxy; Alkylamino, Fluoralkyl, Wasserstoff und -WSA besteht, wobei W eine zweiwertige Verknüpfungsgruppe ist und A ein Vinylpolymersegment oder ein Block, der im wesentlichen aus einem polymerisierten radikalisch polymerisierbaren Monomer besteht, ist;
G₂ und G₄ A umfassen.

6. System gemäß Anspruch 5, wobei:
A aus der Gruppe ausgewählt ist, die aus N-Vinylpyrrolidon, N,N-Diethylaminoethylmethacrylat, N,N-Dimethylaminoethylmethacrylat, N,N-Diethylaminoethylacrylat, N,N-Dimethylaminoethylacrylat und N-t-Butylaminoethylmethacrylat, Styrol, Methylmethacrylat, Methylacrylat, Acrylsäure, Itaconsäure, Maleinsäure, 2-Carboxyethylacrylat, Acrylamid, Methacrylamid, Acrylnitril, Isobornylmethacrylat, Butylmethacrylat, Isopropylmethacrylat, Vinylacetat, Hydroxypropylacrylat, Hydroxyethylacrylat, Dihydroxypropylacrylat und Gemischen davon besteht.

7. System gemäß Anspruch 1, wobei das Trennmittel ein Copolymer von D- und E-Monomeren ist, die unter Bildung eines Polymergerüsts copolymerisiert sind, wobei ein F-Monomer darauf gepfropft ist, wobei:
D wenigstens ein radikalisch polymerisierbares Vinylmonomer ist;
E wenigstens ein polares Monomer ist, das mit D copolymerisierbar ist, wobei die Menge von E bis zu 30% des Gesamtgewichts aller Monomere beträgt; und
F ein Monomer mit der allgemeinen Formel X-(Y)ₘSiR₍₃₋ₘ₎Zₘ ist, wobei
X eine Vinylgruppe ist, die mit den D- und E-Monomeren copolymerisierbar ist;
Y eine zweiwertige Verknüpfungsgruppe ist, wobei n Null oder 1 ist;
m eine ganze Zahl von 1 bis 3 ist;
R Wasserstoff, Niederalkyl (z.B. Methyl, Ethyl oder Propyl), Aryl (z.B. Phenyl oder substituiertes Phenyl) oder Alkoxy ist; und
Z eine einwertige Siloxanpolymer-Struktureinheit mit einem Zahlenmittel des Molekulargewichts von über 1000 ist, die unter Copolymerisationsbedingungen im wesentlichen unreaktiv ist.

8. System gemäß Anspruch 7, wobei das D-Monomer aus der Gruppe ausgewählt ist, die aus Styrol, Vinylacetat, Vinylchlorid, Vinylidenchlorid, Acrylnitril, Acryl- oder Methacrylsäureestern von nichttertiären Alkoholen mit 1 bis 18 Kohlenstoffatomen und Gemischen davon besteht.

9. System gemäß Anspruch 8, wobei das E-Monomer aus der Gruppe ausgewählt ist, die aus N-Vinylpyrrolidon, N,N-Diethylaminoethylmethacrylat, N,N-Dimethylaminoethylmethacrylat, N,N-Diethylaminoethylacrylat, N,N-Dimethylaminoethylacrylat und N-t-Butylaminoethylmethacrylat, Methylmethacrylat, Methylacrylat, Acrylsäure, Itaconsäure, Maleinsäure, 2-Carboxyethylacrylat, Acrylamid, Methacrylamid, Isobornylmethacrylat, Butylmethacrylat, Isopropylmethacrylat, Hydroxypropylacrylat, Hydroxyethylacrylat, Dihydroxypropylacrylat und Gemischen davon besteht.

10. Artikel, der wenigstens ein erstes und ein zweites Substrat umfasst, wobei das erste Substrat eine hintere Oberfläche aufweist, die mit einer repositionierbaren Kleberzusammensetzung mit einer Schälfestigkeit von wenigstens 3,88 N/dm beschichtet ist, welche ein Gemisch umfasst von einer oder mehreren Sorten polymerer und elastomerer Mikrokugeln, wobei die Mikrokugeln wenigstens eine Alkylacrylat- oder Alkylmethacrylat-Struktureinheit umfassen, sowie einem adhäsiven Bindemittel, das wenigstens eine Acrylamid-Struktureinheit umfasst, und wenigstens ein Teil der vorderen Oberfläche des zweiten Substrats mit einem Trennmittel beschichtet ist, das ein Polymer umfasst, welches wenigstens ein Vinylpolymersegment mit einem T_{g} zwischen -10 °C und 65°C sowie wenigstens ein Siloxanpolymersegment aufweist.

11. Artikel gemäß Anspruch 10, wobei der Artikel weiterhin wenigstens ein Substrat zwischen dem ersten und dem zweiten Substrat umfasst, wobei jedes zusätzliche Substrat eine vordere und eine hintere Oberfläche hat, wobei die vordere und die hintere Oberfläche der zusätzlichen Substrate einander gegenüberliegen, von jedem zusätzlichen Substrat wenigstens ein Teil der hinteren Oberfläche mit der Kleberzusammensetzung beschichtet ist und wenigstens ein Teil der vorderen Fläche mit dem Trennmittel beschichtet ist.

## Revendications

1. Système comprenant :
a) un agent anti-adhérent comprenant un polymère possédant au moins un segment polymérique vinylique ayant une Tv comprise entre -10°C et 65°C et au moins un segment polymérique siloxane, et
b) une composition adhésive repositionnable ayant une adhérence en pelage d'au moins 3,88 N/dm et comprenant un mélange d'une ou de plusieurs microsphères polymériques et élastomériques dans laquelle les microsphères comprennent au moins un fragment acrylate d'alkyle ou méthacrylate d'alkyle et un liant adhésif comprenant au moins un fragment à base acrylamide.

2. Système selon la revendication 1 dans lequel ledit liant comprend en outre au moins un monomère polymérisable par voie radicalaire copolymérisé avec ledit fragment à base acrylamide.

3. Système selon la revendication 2 dans lequel ledit monomère polymérisable par voie radicalaire est choisi entre un acrylate et un méthacrylate.

4. Système selon la revendication 1 dans lequel ladite composition adhésive comprend de 10 à 90 parties en poids dudit liant et de 90 à 10 parties en poids desdites microsphères.

5. Système selon la revendication 1 dans lequel ledit agent anti-adhérent est un copolymère comprenant la formule 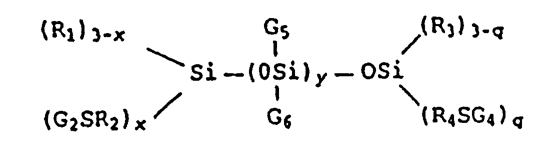 dans laquelle
R₁ sont des fragments monovalents qui peuvent être indépendamment identiques ou différents et sont choisis parmi les groupes alkyle, aryle, alkylaryle, alcoxy, alkylamino, hydroxyle, un atome d'hydrogène, et un groupe fluoroalkyle ;
R₂ peuvent être indépendamment identiques ou différents et sont des groupes de liaison divalents ;
R₃ sont des fragments monovalents qui peuvent être indépendamment identiques ou différents et sont choisis parmi les groupes alkyle, aryle, alkylaryle, alcoxy, alkylamino, hydroxyle, un atome d'hydrogène, et un groupe fluoroalkyle ;
R₄ peuvent être indépendamment identiques ou différents et sont des groupes de liaison divalents ;
x est un entier de 0 à 3 ;
y est un entier de 10 ou plus ;
q est un entier de 0 à 3 ;
G₅ et G₆ sont des fragments monovalents qui peuvent être indépendámment identiques ou différents choisis parmi les groupes alkyle, aryle, alkylaryle, alcoxy, alkylamino, fluoroalkyle, un atome d'hydrogène, et -WSA dans laquelle W est un groupe de liaison divalent et A est un segment polymérique de vinyle ou une séquence constituée essentiellement d'un monomère polymérisable par voie radicalaire ;
G₂ et G₄ comprennent A.

6. Système selon la revendication 5 dans lequel :
A est choisi parmi la N-vinylpyrrolidone, le méthacrylate de N,N-diéthylaminoéthyle, le méthacrylate de N,N-diméthylaminoéthyle, l'acrylate de N,N-diéthylaminoéthyle, l'acrylate de N,N-diméthylaminoéthyle et le méthacrylate de N-tert.-butylaminoéthyle, le styrène, le méthacrylate de méthyle, l'acrylate de méthyle, l'acide acrylique, l'acide itaconique, l'acide maléique, l'acrylate de 2-carboxyéthyle, l'acrylamide, le méthacrylamide, l'acrylonitrile, le méthacrylate d'isobornyle, le méthacrylate de butyle, le méthacrylate d'isopropyle, l'acétate de vinyle, l'acrylate d'hydroxypropyle, l'acrylate d'hydroxyéthyle, l'acrylate de dihydroxypropyle et les mélanges de ceux-ci.

7. Système selon la revendication 1 dans lequel l'agent anti-adhérent est un copolymère de monomères D et E copolymérisés pour former un squelette polymérique avec un monomère F greffé dessus, dans lequel :
D est au moins un monomère de vinyle polymérisable par voie radicalaire ;
E est au moins un monomère polaire copolymérisable avec D, la quantité de E étant au maximum de 30% du poids total de tous les monomères ; et
F est un monomère ayant la formule générale
X- (Y)ₘSiR₍₃₋ₘ₎Zₘ
dans laquelle
X est un groupe vinyle compolymérisable avec les monomères D et E,
Y est un groupe de liaison divalent où n est zéro ou 1 ;
m est un entier variant de 1 à 3 ;
R est un atome d'hydrogène, un groupe alkyle de bas poids moléculaire (par exemple, méthyle, éthyle ou propyle), aryle (par exemple, phényle ou phényle substitué), ou alcoxy ; et
Z est un fragment polymérique siloxane monovalent ayant une masse moléculaire moyenne en nombre supérieure à 1000 et est essentiellement non réactif dans les conditions de copolymérisation.

8. Système selon la revendication 7 dans lequel ledit monomère D est choisi parmi le styrène, l'acétate de vinyle, le chlorure de vinyle, le chlorure de vinylidène, l'acrylonitrile, les esters d'acide acrylique ou méthacrylique d'alcools non tertiaires ayant de 1 à 18 atomes de carbone et les mélanges de ceux-ci.

9. Système selon la revendication 8 dans lequel ledit monomère E est choisi parmi la N-vinyl-pyrrolidone, le méthacrylate de N,N-diéthylaminoéthyle, le méthacrylate de N,N-diméthylaminoéthyle, l'acrylate de N,N-diéthylaminoéthyle, l'acrylate de N,N-diméthylaminoéthyle et le méthacrylate de N-tert.-butylaminoéthyle, le méthacrylate de méthyle, l'acrylate de méthyle, l'acide acrylique, l'acide itaconique, l'acide maléique, l'acrylate de 2-carboxyéthyle, l'acrylamide, le méthacrylamide, le méthacrylate d'isobornyle, le méthacrylate de butyle, le méthacrylate d'isopropyle, l'acrylate d'hydroxypropyle, l'acrylate d'hydroxyéthyle, l'acrylate de dihydroxypropyle et les'mélanges de ceux-ci.

10. Article comprenant au moins un premier et un second substrats, ledit premier substrat ayant une surface arrière revêtue avec une composition adhésive repositionnable ayant une adhérence en pelage d'au moins 3,88 N/dm et comprenant un mélange d'une ou de plusieurs microsphères polymériques et élastomériques dans lequel les microsphères comprennent au moins un fragment acrylate d'alkyle ou méthacrylate d'alkyle et un liant adhésif comprenant au moins un fragment acrylamide et ledit second substrat ayant au moins une portion de ladite surface avant revêtue avec un agent anti-adhérent comprenant un polymère possédant au moins un segment polymérique vinylique ayant une Tv comprise entre -10°C et 65°C et au moins un segment polymérique siloxane.

11. Article selon la revendication 10 dans lequel ledit article comprend en outre au moins un substrat intermédiaire entre ledit premier et second substrats, chaque substrat additionnel ayant une surface avant et une surface arrière, lesdites surfaces avant et arrière desdits substrats additionnels se faisant face l'une l'autre, chaque substrat additionnel ayant au moins une portion d'une surface dite arrière revêtue avec ladite composition adhésive et au moins une portion de chacune desdites faces avant avec ledit agent anti-adhérent.
